# EUROPÄISCHE PATENTSCHRIFT

(11) **EP 3 804 487 B1**
(45) Veröffentlichungstag und Bekanntmachung des Hinweises auf die Patenterteilung: **06.03.2024**
(21) Anmeldenummer: 20199536.2
(22) Anmeldetag: 01.10.2020
(51) Int. Cl.: A01B 76/00, B60Q 1/04, B60Q 1/14, B60Q 1/24

(54) **SYSTEM ZUR STEUERUNG EINES ARBEITSSCHEINWERFERS EINER INSBESONDERE LANDWIRTSCHAFTLICHEN ARBEITSMASCHINE**
SYSTEM FOR CONTROLLING A WORK SPOTLIGHT OF AN, IN PARTICULAR AGRICULTURAL, WORKING MACHINE
SYSTÈME DE COMMANDE D'UN PHARE DE TRAVAIL D'UNE MACHINE, EN PARTICULIER D'UNE MACHINE AGRICOLE

(30) Priorität: 11.10.2019 DE 102019127435
(43) Veröffentlichungstag der Anmeldung: 14.04.2021
(73) Patentinhaber: ASPÖCK Systems GmbH, 4722 Peuerbach (AT)
(72) Erfinder: SCHAMBERGER, Stefan, 4720 Kallham (AT); STRUBREITER, Daniel, 4723 Natternbach (AT)
(74) Vertreter: Söllner, Udo

(56) Entgegenhaltungen:
- EP-A1- 3 770 014
- WO-A1-2019/036674
- CN-U- 209 026 723
- DE-A1-102009 039 324
- DE-A1-102010 030 649
- DE-A1-102013 021 647
- DE-U1- 29 904 833

## Beschreibung

Die vorliegende Erfindung betrifft ein System zur Steuerung eines Arbeitsscheinwerfers einer insbesondere landwirtschaftlichen Arbeitsmaschine, umfassend eine Arbeitsmaschine mit mindestens einem Arbeitsscheinwerfer, der zur Beleuchtung eines von einem Benutzer der Arbeitsmaschine zu überwachenden Arbeitsbereichs vorgesehen ist, eine mit der Arbeitsmaschine funktional zu koppelnde, insbesondere landwirtschaftliche Funktionsmaschine und Steuerungsmittel zur Steuerung des Betriebs des Arbeitsscheinwerfers und eine Datenspeichereinrichtung, die zur Speicherung eines Beleuchtungsprofils eingerichtet ist, wobei das Beleuchtungsprofil Daten und/oder Anweisungen umfasst, welche zur Übertragung an die Steuerungsmittel vorgesehen sind und die Steuerungsmittel den mindestens einen Arbeitsscheinwerfer zur Beleuchtung des Arbeitsbereichs entsprechend dem Beleuchtungsprofil ansteuern, nach dem Oberbegriff des Anspruchs 1.

Wenn eine landwirtschaftliche Arbeitsmaschine in der Form lediglich eines als Beispiel zu nennenden Traktors in Verbindung mit einem Arbeitsgerät oder einer Funktionsmaschine eingesetzt wird, wird hierbei aus Effizienzgründen oder zur Erhöhung der Auslastung der beschriebenen Geräte beziehungsweise Maschinen oftmals auch in Nachteinsatz oder in der Dämmerung gearbeitet.

Hierzu muss der Arbeitsbereich für den Benutzer oder Bediener der Arbeitsmaschine visuell überprüfbar sein, wozu eine Beleuchtungseinrichtung vorgesehen ist, welche beispielsweise an der Arbeitsmaschine angebracht wird und dazu vorgesehen ist, den Arbeitsbereich zu beleuchten.

In den Arbeitsbereich geht auch der Arbeitsbereich der Funktionsmaschine oder des Arbeitsgerätes ein, bei dem es sich beispielsweise um eine Rundballenpresse oder ein anderes Arbeitsgerät handeln kann, welches in Verbindung mit dem genannten Traktor verwendet werden kann. Die Miteinbeziehung des Arbeitsbereichs der Funktionsmaschine ist deshalb von Bedeutung, da es sich bei dem Arbeitsbereich oftmals um einen Einlaufbereich in die Funktionsmaschine handeln kann, in dem also Feldfrüchte erfasst werden und dieser Bereich selbstverständlich zur Vermeidung von unerwünschten Gegenständen im Einlaufbereich durch den Benutzer überwacht werden muss.

Die Ausleuchtung des Arbeitsbereichs führt oftmals zur Beeinträchtigung der Sichtverhältnisse im Arbeitsbereich, da es durch die benötigte starke Ausleuchtung dazu kommen kann, dass vom Arbeitsscheinwerfer emittiertes Licht von Flächen oder Oberflächen des Arbeitsgeräts oder der Funktionsmaschine reflektiert wird und dieses reflektierte Licht dazu führt, dass der Benutzer geblendet wird.

Oftmals werden solche Kombinationen aus Arbeitsmaschine und Arbeitsgerät oder Funktionsmaschine auch nicht alleine auf einem Feld eingesetzt, sondern es findet simultan auch ein Einsatz von anderen Arbeitsmaschinen oder Arbeitsgeräten auf dem Feld statt, deren Benutzer ebenfalls aufgrund der starken Ausleuchtung des eigenen Arbeitsbereichs oder auch des Arbeitsbereichs der anderen Arbeitsmaschine geblendet werden beziehungsweise Beeinträchtigungen der Sichtverhältnisse erfahren.

Die bisherige Herangehensweise an dieses Problem bestand darin, die in diesem Umfeld eingesetzten Arbeitsscheinwerfer dimmbar auszuführen. Das Dimmen des Arbeitsscheinwerfers aber führt zu einer Reduktion der Lichtleistung des Arbeitsscheinwerfers, was wiederum dazu führt, dass die mit dem Arbeitsscheinwerfer erzielbare Ausleuchtung des Arbeitsbereichs beträchtlich verringert wird und somit auch die Sichtbarkeit von Objekten im Arbeitsbereich reduziert wird.

Anhand der DE 10 2017 203 528 A1 sind ein Verfahren und eine Vorrichtung zum Betreiben eines Beleuchtungssystems bekannt geworden, welches darauf basiert, dass die vom Benutzer des Systems eingeschlagene Blickrichtung erfasst wird und das Beleuchtungssystem auf der Basis dieser Erfassung angesteuert wird.

Anhand der DE 10 2016 207 306 A1 ist ein Scheinwerfer bekannt geworden, welcher anhand von Sensorsignalen gesteuert wird.

Anhand der DE 20 2014 011 228 U1 ist eine Forstmaschine bekannt geworden mit einem am Kopf des Harvester vorgesehenen Arbeitsscheinwerfer und einem System zur Steuerung des Arbeitsscheinwerfers.

Schließlich ist anhand der DE 10 2010 030 649 A1 eine Anordnung nach dem Oberbegriff des Anspruchs 1 bekannt geworden.

Ausgehend hiervon liegt der vorliegenden Erfindung die Aufgabe zugrunde, ein System zur Steuerung eines Arbeitsscheinwerfers einer insbesondere landwirtschaftlichen Arbeitsmaschine zu schaffen, welches die Gefahr einer Blendung oder Sichtbeeinträchtigung des Benutzers eines solchen Systems verringert und einen zur Verwendung in einem solchen System vorgesehenen Arbeitsscheinwerfer bereitzustellen.

Die Erfindung weist zur Lösung dieser Aufgabe hinsichtlich des Systems die im Anspruch 1 angegebenen Merkmale auf. Weiterhin wird ein System nach Anspruch 17 vorgeschlagen. Vorteilhafte Ausgestaltungen hiervon sind in den abhängigen Ansprüchen beschrieben.

Die Erfindung schafft ein System zur Steuerung eines Arbeitsscheinwerfers einer insbesondere landwirtschaftlichen Arbeitsmaschine, wobei das System umfasst:
- eine Arbeitsmaschine mit mindestens einem Arbeitsscheinwerfer, der zur Beleuchtung eines von einem Benutzer der Arbeitsmaschine zu überwachenden Arbeitsbereichs vorgesehen ist,
- eine mit der Arbeitsmaschine funktional zu koppelnde, insbesondere landwirtschaftliche Funktionsmaschine
- Steuerungsmittel zur Steuerung des Betriebs des Arbeitsscheinwerfers,
- eine Datenspeichereinrichtung, die zur Speicherung eines Beleuchtungsprofils eingerichtet ist, wobei das Beleuchtungsprofil Daten und/oder Anweisungen umfasst, welche zur Übertragung an die Steuerungsmittel vorgesehen sind und die Steuerungsmittel den mindestens einen Arbeitsscheinwerfer zur Beleuchtung des Arbeitsbereichs entsprechend dem Beleuchtungsprofil ansteuern,
wobei sich das System dadurch auszeichnet,
dass die Datenspeichereinrichtung zur Speicherung unterschiedlicher Beleuchtungsprofile eingerichtet ist, die unterschiedlichen Benutzern des Systems zugeordnet sind.

Das System schafft daher die Möglichkeit, dass ein Benutzer ein vorteilhaftes Beleuchtungsprofil derart auf der Datenspeichereinrichtung hinterlegen kann, dass dieses Beleuchtungsprofil Blendungen oder Sichtbehinderungen des Benutzers vermeidet, da das Beleuchtungsprofil Daten und/oder Anweisungen umfasst, die von den Steuerungsmitteln zur Ansteuerung der Lichtemission des Arbeitsscheinwerfers genutzt werden, sodass die Lichtemission entsprechend den Wünschen oder Anforderungen des Benutzers so stattfindet, dass eine Blendwirkung des Benutzers durch die Lichtemission vermieden wird.

Es ist daher möglich, ein benutzerspezifisches Beleuchtungsprofil auf der Datenspeichereinrichtung zu hinterlegen, dessen Abruf und Umsetzung durch die Steuerungsmittel dann dazu führt, dass der Benutzer keine Blendwirkung und/oder Sichtbehinderungen durch die Lichtemission des unter Zugrundelegung des Benutzerprofils angesteuerten Arbeitsscheinwerfers erfährt.

Auch ist es möglich, neben dem benutzerspezifischen Beleuchtungsprofil ein für die jeweilige Funktionsmaschine spezifisches Beleuchtungsprofil auf der Datenspeichereinrichtung zu hinterlegen.

Wird daher eine funktional mit der Arbeitsmaschine gekoppelte Funktionsmaschine von der Arbeitsmaschine getrennt und eine andere Funktionsmaschine mit der Arbeitsmaschine funktional gekoppelt, beispielsweise also mechanisch und/oder elektrisch mit der Arbeitsmaschine gekoppelt, wird dies vom erfindungsgemäßen System erkannt und das für die erkannte Funktionsmaschine spezifische Beleuchtungsprofil von der Datenspeichereinrichtung ausgelesen und an die Steuerungsmittel übertragen, sodass die Steuerungsmittel dann den Betrieb des Arbeitsscheinwerfers einrichten derart, dass eine Störung der Sichtverhältnisse des Benutzers, die für diese Funktionsmaschine ganz spezifisch wären, unterbunden werden kann, da der Arbeitsscheinwerfer über die Steuerungsmittel unter Zugrundelegung des für die aktuell mit der Arbeitsmaschine funktional gekoppelten Funktionsmaschine vorgesehenen Beleuchtungsprofils so angesteuert wird, dass Licht, welches von dem Arbeitsscheinwerfer zur Beleuchtung des zu überwachenden Arbeitsbereichs emittiert wird, von an der Funktionsmaschine vorhandenen etwaigen Reflexionsflächen nicht so zurückgestrahlt wird, dass der Benutzer durch derartige Reflexionen Sichtbehinderungen erfahren würde.

So ist es beispielsweise möglich, dass die mit der Arbeitsmaschine aktuell gekoppelte Funktionsmaschine Flächen aufweist, welche bei einem bekannten Betrieb des Arbeitsscheinwerfers zu Reflexionen des emittierten Lichts in Richtung des Benutzers führen würden, die die Sichtverhältnisse des Benutzers in Richtung und auf den zu überwachenden Arbeitsbereich einschränken würden.

Der Benutzer des erfindungsgemäßen Systems hat die Möglichkeit, über die Steuerungsmittel den Arbeitsscheinwerfer so anzusteuern, dass das von diesem emittierte Licht nicht auf die störenden Reflexionsflächen der Funktionsmaschine trifft und daher auch keine störenden Reflexionen in Richtung zum Benutzer mehr stattfinden. Dieses so für den Benutzer vorteilhafte Beleuchtungsprofil kann der Benutzer auf der Datenspeichereinrichtung hinterlegen, sodass das Beleuchtungsprofil für eine spätere Ansteuerung des Arbeitsscheinwerfers wieder zur Verfügung steht.

Die spätere Ansteuerung des Arbeitsscheinwerfers kann beispielsweise dann stattfinden, wenn die Funktionsmaschine von der Arbeitsmaschine funktional getrennt wurde und danach funktional mit der Arbeitsmaschine wieder gekoppelt wird, woraufhin das System das auf der Datenspeichereinrichtung hinterlegte Beleuchtungsprofil automatisiert an die Steuerungsmittel überträgt und auf diese Weise das vorteilhafte Beleuchtungsprofil dazu eingesetzt werden kann, dass der Arbeitsscheinwerfer in reproduzierbarer Weise unter Zugrundelegung des vorteilhaften Beleuchtungsprofils angesteuert wird und somit in reproduzierbarer Weise eine etwaige Blendwirkung oder Beeinflussung der Sichtverhältnisse des Benutzers, die ganz charakteristisch für die aktuell gekoppelte Funktionsmaschine wären, vermieden werden.

In ähnlicher Weise kann auf der Datenspeichereinrichtung auch ein Beleuchtungsprofil hinterlegt werden, welches Blendwirkung oder Beeinflussung der Sichtverhältnisse anderer Benutzer vermeidet, wobei zu diesem Zweck auch ein benutzerspezifisches und für die aktuelle Funktionsmaschine spezifisches Beleuchtungsprofil auf der Datenspeichereinrichtung hinterlegt werden kann, also ein Beleuchtungsprofil, welches sowohl Daten und/oder Anweisungen umfasst, die spezifisch für die aktuelle Funktionsmaschine sind, als auch Daten und/oder Anweisungen umfasst, die spezifisch für den aktuellen Benutzer sind.

Hierzu kann beispielsweise auch eine Benutzererkennung vorgesehen sein, sodass also der aktuelle Benutzer des Systems erkannt wird und automatisiert ein auf der Datenspeichereinrichtung hinterlegtes benutzerspezifisches Beleuchtungsprofil abgerufen und zur Ansteuerung des Betriebs des Arbeitsscheinwerfers verwendet wird, welches ergänzt wird um Daten und/oder Anweisungen, die spezifisch sind für die Funktionsmaschine, welche aktuell mit der vom Benutzer benutzten Arbeitsmaschine benutzt wird und somit ein Beleuchtungsprofil zur Verfügung steht, welches spezifisch für den Benutzer und für die aktuelle Funktionsmaschine ist.

Die Datenspeichereinrichtung kann auf diese Weise eine Vielzahl von Beleuchtungsprofilen für unterschiedliche Benutzer umfassen, welche also benutzerspezifisch und für die Funktionsmaschine spezifisch zur Verfügung stehen.

Die Datenübertragung von der Datenspeichereinrichtung, welche beispielsweise an der Funktionsmaschine angeordnet ist, kann über eine leitungsgebundene Verbindung der Funktionsmaschine mit der Arbeitsmaschine stattfinden oder auch beispielsweise über eine nicht-leitungsgebundene Verbindung.

So ist es auch möglich, dass die funktionale Kopplung der Funktionsmaschine mit der Arbeitsmaschine vom System erkannt wird und daraufhin eine Übertragung der Daten und/oder Anweisungen an die Steuerungsmittel automatisiert stattfindet, welche beispielsweise Teil einer Steuerung der Arbeitsmaschine darstellen können.

Die Übertragung des Beleuchtungsprofils in der Form von Daten und/oder Anweisungen für die Steuerungsmittel kann auch auf eine externe Steuerungseinheit erfolgen, die der Benutzer beispielsweise in der Form eines Smartphones mit sich führt.

Der Benutzer kann also auf seinem Smartphone ein Beleuchtungsprofil erstellen, welches dann entweder direkt auf die Datenspeichereinrichtung übertragen wird oder auf die Steuerungsmittel übertragen wird und von dort auf die Datenspeichereinrichtung übertragen wird, sodass das Beleuchtungsprofil für einen erneuten Abruf zur Ansteuerung des Arbeitsscheinwerfers entsprechend dem Beleuchtungsprofil zur Verfügung steht.

Obwohl vorstehend ausgeführt wurde, dass der Arbeitsscheinwerfer an der Arbeitsmaschine vorgesehen ist, ist es nach der Erfindung auch vorgesehen, den Arbeitsscheinwerfer statt an der Arbeitsmaschine an der Funktionsmaschine anzuordnen, sodass der Arbeitsscheinwerfer den Arbeitsbereich von der Funktionsmaschine aus beleuchtet.

Dieser Aspekt umfasst also ein System zur Steuerung eines Arbeitsscheinwerfers, wobei das System eine Arbeitsmaschine und eine funktional mit der Arbeitsmaschine zu koppelnde Funktionsmaschine aufweist und das System auch mindestens einen Arbeitsscheinwerfer aufweist, der zur Beleuchtung eines von einem Benutzer des Systems zu überwachenden Arbeitsbereichs vorgesehen ist und das System auch Steuerungsmittel zur Steuerung des Betriebs des Arbeitsscheinwerfers umfasst und das System eine Datenspeichereinrichtung aufweist, die zur Speicherung eines Beleuchtungsprofils eingerichtet ist, wobei das Beleuchtungsprofil Daten und/oder Anweisungen umfasst, welche zur Übertragung an die Steuerungsmittel vorgesehen sind und die Steuerungsmittel den mindestens einen Arbeitsscheinwerfer zur Beleuchtung des Arbeitsbereichs entsprechend dem Beleuchtungsprofil ansteuern.

Auf diese Weise kann auch bei diesem System vom Benutzer mindestens ein Beleuchtungsprofil auf der Datenspeichereinrichtung hinterlegt werden, welches es ermöglicht, dass die Steuerungsmittel in reproduzierbarer Weise den Arbeitsscheinwerfer zur Beleuchtung des Arbeitsbereichs so ansteuern, wie es der Benutzer gemäß dem hinterlegten Beleuchtungsprofil wünscht. Selbstverständlich können auch bei einem solchen System Beleuchtungsprofile von unterschiedlichen Benutzern hinterlegt werden und es kann eine automatisierte Übertragung des Beleuchtungsprofils auf das Steuerungsmittel durchgeführt werden in Abhängigkeit beispielsweise der Erfassung des jeweiligen Benutzers durch das System und der Erfassung der jeweiligen Funktionsmaschine durch das System.

Nach einer Weiterbildung des Systems ist es vorgesehen, dass die Steuerungsmittel an der Arbeitsmaschine und/oder der Funktionsmaschine angeordnet sind. Die Steuerungsmittel können also Teil einer an der Funktionsmaschine vorgesehenen Steuerung sein, welche dann den oder die Arbeitsscheinwerfer entsprechend dem gewünschten Beleuchtungsprofil ansteuern und können auch Teil einer Steuerung sein, welche an der Arbeitsmaschine ohnehin vorhanden ist, die dann den oder die Arbeitsscheinwerfer entsprechend dem gewünschten Beleuchtungsprofil ansteuern.

Es ist nach einer Weiterbildung der Erfindung auch vorgesehen, dass die Datenspeichereinrichtung funktional mit der Funktionsmaschine gekoppelt ist derart, dass das Beleuchtungsprofil bei einer funktionalen Trennung der Funktionsmaschine von der Arbeitsmaschine erhalten bleibt, sodass das Beleuchtungsprofil oder eine Vielzahl von Beleuchtungsprofilen, die auch benutzerspezifische Beleuchtungsprofile umfassen können, bei einer Trennung der Funktionsmaschine von der Arbeitsmaschine erhalten bleiben und demgemäß bei einer erneuten Verbindung der Funktionsmaschine mit der Arbeitsmaschine zur Übertragung auf die Steuerungsmittel wieder zur Verfügung stehen.

Es ist nach einer Weiterbildung der Erfindung vorgesehen, dass das System zur automatischen Übertragung des Beleuchtungsprofils bei der Erstellung einer funktionalen Koppelung der Funktionsmaschine mit der Arbeitsmaschine an die Steuermittel ausgebildet ist. Auf diese Weise steht dann ein der Funktionsmaschine entsprechendes Beleuchtungsprofil nach der Wiederherstellung der funktionalen Koppelung zwischen der Funktionsmaschine und der Arbeitsmaschine wieder zur Verfügung und es wird auch erreicht, dass eine Vielzahl von auf der Datenspeichereinrichtung gespeicherter Beleuchtungsprofile an die Steuerungsmittel übertragen werden können, welche dann den oder die Arbeitsscheinwerfer zur Steuerung dessen Betriebs unter Zugrundelegung eines oder mehrerer Beleuchtungsprofile ansteuern, welche auch ausgewählt werden können auf der Basis einer Erfassung oder Erkennung des die Arbeitsmaschine aktuell benutzenden Benutzers.

Auf diese Weise stehen Beleuchtungsprofile zur Verfügung, welche Daten und/oder Anweisungen umfassen, die spezifisch für die aktuelle Funktionsmaschine sind und dann ein solches Beleuchtungsprofil zur Ansteuerung des Betriebs des Arbeitsscheinwerfers verwendet wird, welches spezifisch ist für den die Arbeitsmaschine aktuell benutzenden Benutzers.

Die Ansteuerung des oder der Arbeitsscheinwerfer erfolgt dann auf der Basis eines Beleuchtungsprofils, welches spezifisch ist für die aktuelle Funktionsmaschine und spezifisch ist für den die Arbeitsmaschine aktuell benutzenden Benutzer.

Zu diesem Zweck ist es nach der Erfindung vorgesehen, dass die Datenspeichereinrichtung zur Speicherung unterschiedlicher Beleuchtungsprofile eingerichtet ist, die unterschiedlichen Benutzern des Systems zugeordnet sind.

Es ist nach einer Weiterbildung der Erfindung auch vorgesehen, dass die Datenspeichereinrichtung zur Übertragung mindestens eines Beleuchtungsprofils von den Steuermitteln auf die Datenspeichereinrichtung und zur Speicherung des mindestens einen Beleuchtungsprofils auf der Datenspeichereinrichtung ausgebildet ist.

Auf diese Weise können über die Steuerungsmittel Beleuchtungsprofile bereitgestellt werden, welche dann als Beleuchtungsprofile zum Wiederabruf auf der Datenspeichereinrichtung zur Verfügung stehen. Neben den Steuerungsmitteln können entsprechende Beleuchtungsprofile auch vom Benutzer auf einem Smartphone erzeugt werden, die dann auf die Steuerungsmittel übertragen werden und von den Steuerungsmitteln auf die Datenspeichereinrichtung übertragen werden oder auch vom Smartphone direkt auf die Datenspeichereinrichtung übertragen werden können, um dann zum späteren Abruf wieder zur Verfügung zu stehen.

Es ist nach einer Weiterbildung der Erfindung vorgesehen, dass die Datenspeichereinrichtung einen mit der Funktionsmaschine gekoppelten, nichtflüchtigen Datenspeicher aufweist, der an einem Aufbau der Funktionsmaschine oder an einer funktionalen, insbesondere elektrischen Verbindungseinrichtung der Funktionsmaschine angeordnet ist, die zur Koppelung der Funktionsmaschine mit der Arbeitsmaschine vorgesehen ist.

Wird dann die Funktionsmaschine mit der Arbeitsmaschine funktional gekoppelt, kann ein automatisierter Abruf der auf der Datenspeichereinrichtung gespeicherten Beleuchtungsprofile oder eines einzelnen Beleuchtungsprofils stattfinden, welches dann auf die Arbeitsmaschine übertragen wird, um über die Steuerungsmittel zur entsprechenden Ansteuerung des oder der Arbeitsscheinwerfer zur Verfügung zu stehen.

Es ist nach einer Weiterbildung der Erfindung auch vorgesehen, dass der Arbeitsscheinwerfer zur Beleuchtung des Arbeitsbereichs entsprechend dem Beleuchtungsprofil ausgebildet ist und mindestens zwei, mit mindestens einem jeweiligen Leuchtmittel versehene Segmente aufweist und die Segmente und/oder die Leuchtmittel der Segmente getrennt von anderen Segmenten und/oder Leuchtmitteln der Segmente zur Emission von Licht ansteuerbar sind.

Auf diese Weise können einzelne Segmente des Arbeitsscheinwerfers und/oder einzelne Leuchtmittel oder Lichtemitter einzelner Segmente des Arbeitsscheinwerfers von den Steuerungsmitteln entsprechend angesteuert werden, sodass eine Blendwirkung und/oder Beeinflussung der Sichtverhältnisse für den Benutzer durch die entsprechende Ansteuerung der Segmente und/oder Leuchtmittel der Segmente gezielt vermieden wird.

Es ist dabei nach einer Weiterbildung der Erfindung auch vorgesehen, dass der mindestens eine Arbeitsscheinwerfer ein LED-Arbeitsscheinwerfer mit mindestens zwei Segmenten mit mindestens einer jeweiligen Leuchtdiode pro Segment ist. Auf diese Weise können einzelne Leuchtmittel und/oder Leuchtdioden einzelner Segmente so angesteuert werden, dass eine Beeinflussung des Sichtverhältnisse des die Arbeitsmaschine benutzenden Benutzers vermieden wird.

Es ist dabei nach einer Weiterbildung der Erfindung auch vorgesehen, dass die Steuerungsmittel zur selektiven Ansteuerung des mindestens einen Arbeitsscheinwerfers ausgebildet sind derart, dass Segmente und/oder Leuchtdioden von Segmenten zur Herbeiführung eines Beleuchtungsprofils selektiv abschaltbar sind und Segmente und/oder Leuchtdioden von Segmenten selektiv zur Emission einer die Nennleistung pro Leuchtdiode übersteigenden Lichtleistung übersteuerbar sind.

Auf diese Weise wird es ermöglicht, dass ein konstanter summarischer Lichtaustritt des Arbeitsscheinwerfers erreicht wird, obwohl einzelne Segmente und/oder einzelne Leuchtdioden einzelner Segmente selektiv ausgeschaltet sind und über eine entsprechende Ansteuerung einzelner Segmente und/oder einzelne Leuchtdioden einzelner Segmente mit einer die Nennleistung pro Leuchtdiode übersteigenden Leistung der vom Arbeitsscheinwerfer emittierte Lichtstrom konstant gehalten werden kann, also im Gegensatz zur bekannten Vorgehensweise mittels einer Dimmung des Arbeitsscheinwerfers kein Verlust an Lichtleistung und damit an Beleuchtungsleistung oder Helligkeit des Arbeitsbereichs in Kauf genommen werden muss, obwohl gleichzeitig vermieden wird, dass der Benutzer mit Beeinträchtigungen der Sichtverhältnisse des Arbeitsbereichs zu rechnen hat.

Dies kann beispielsweise dadurch erreicht werden, dass einzelne Leuchtdioden mit individuellen Leistungen versorgt werden und somit auch bei einer teilweisen Abschaltung der Leuchtdioden des Arbeitsscheinwerfers eine Verringerung der Gesamtlichtleistung des Arbeitsscheinwerfers vermieden werden kann.

Es ist nach einer Weiterbildung der Erfindung auch vorgesehen, dass der mindestens eine Arbeitsscheinwerfer ein Gehäuse mit in bestimmungsgemäßer Ausrichtung des Arbeitsscheinwerfers an der Arbeitsmaschine zumindest weitgehend horizontal angeordneten Kühlrippen aufweist.

Auf diese Weise wird erreicht, dass der insbesondere zur Verwendung bei landwirtschaftlichen Einsätzen vorgesehene Arbeitsscheinwerfer nicht einer Gefahr ausgesetzt wird, dass die Kühlrippen des Arbeitsscheinwerfers einer starken Verschmutzung ausgesetzt werden, da über die weitgehend horizontal angeordneten Kühlrippen erreicht wird, dass Verschmutzungen von den Kühlrippen des Arbeitsscheinwerfers gleichsam mit der Wirkung eines Daches abgehalten werden.

Es ist nach einer Weiterbildung der Erfindung auch vorgesehen, dass die Steuerungsmittel zur Ansteuerung der Leuchtmittel mit einem vorbestimmten Teil der Nennleistung der Leuchtmittel ausgebildet sind und der vorbestimmte Teil kleinergleich der Nennleistung der Leuchtmittel ist. Auf diese Weise kann beispielsweise erreicht werden, dass die Steuerungsmittel die Leuchtmittel des Arbeitsscheinwerfers mit einer elektrischen Leistung versorgen, die beispielsweise etwa 75 % der Lichtemissionsleistung der einzelnen Leuchtmittel entsprechen. Die Leuchtmittel werden also beispielsweise mit 75 % der Lichtemissionsleistung betrieben und auf diese Weise besteht die Möglichkeit, die Gesamtlichtleistung des Arbeitsscheinwerfers weitgehend konstant zu halten, wenn einzelne Leuchtmittel entsprechend dem Beleuchtungsprofil abgeschaltet werden, da verbliebene Leuchtmittel dann mit einer elektrischen Leistung angesteuert werden können, die zu einer Erhöhung der Lichtemissionsleistung der weiterhin betriebenen Leuchtmittel über die 75-prozentige Lichtleistung hinaus führt. Die Leuchtmittel können daher entsprechend übersteuert werden, um die Gesamtlichtleistung des Arbeitsscheinwerfers konstant zu halten, also die Nachteile einer Dimmung des Arbeitsscheinwerfers insgesamt zu vermeiden.

Es ist nach einer Weiterbildung der Erfindung auch vorgesehen, dass der Arbeitsscheinwerfer eine Einrichtung zur Einstellung der vertikalen Ausrichtung der Lichtaustrittsfläche des Arbeitsscheinwerfers aufweist und die Einrichtung eine Haltevorrichtung zur lösbaren Festlegung des Arbeitsscheinwerfers an einem Träger und ein Formschlussbauteil aufweist, welches mit einer an einem Gehäuse des Arbeitsscheinwerfers vorgesehenen und form- und flächenkomplementär zum ersten Formschlussbauteil vorgesehenen Aufnahme zusammenwirkt.

Bei dem erfindungsgemäßen System können eine Vielzahl von Funktionsmaschinen mit der Arbeitsmaschine gekoppelt werden und der Arbeitsbereich kann ganz unterschiedliche Abmessungen aufweisen.

Der oder die Arbeitsscheinwerfer müssen daher auf den jeweiligen Arbeitsbereich eingestellt werden können, sodass das von dem oder den Arbeitsscheinwerfern emittierte Licht den Arbeitsbereich ausleuchten kann.

Hierzu ist gemäß dem erfindungsgemäßen System vorgesehen, dass der Arbeitsscheinwerfer eine Einrichtung zur Einstellung der vertikalen Ausrichtung der Lichtaustrittsfläche aufweist.

Neben dieser Einstellung zur vertikalen Ausrichtung der Lichtaustrittsfläche kann der Arbeitsscheinwerfer auch eine weitere Einrichtung zur Einstellung der horizontalen Ausrichtung der Lichtaustrittsfläche oder auch eine weitere Einrichtung zur Einstellung der Winkelorientierung der Lichtaustrittsfläche aufweisen.

Die Einrichtung kann eine Haltevorrichtung zur lösbaren Festlegung des Arbeitsscheinwerfers an einem Träger der Arbeitsmaschine und ein Formschlussbauteil aufweisen, welches mit einer an einem Gehäuse des Arbeitsscheinwerfers vorgesehenen und form- und flächenkomplementär zum ersten Formschlussbauteil vorgesehenen Aufnahme oder einem Abschnitt der Aufnahme zusammenwirkt.

Über das Formschlussbauteil kann der Arbeitsscheinwerfer relativ zum Träger in vertikaler und/oder horizontaler und/oder winkeliger Orientierung eingestellt beziehungsweise ausgerichtet werden.

Es ist nach einer Weiterbildung der Erfindung vorgesehen, dass die Haltevorrichtung eine an der Aufnahme vorgesehene Verzahnung umfasst, welche mit einer an dem Formschlussbauteil vorgesehenen Verzahnung in lösbarem Eingriff steht und der Verzahnungseingriff mittels einer Axialverlagerung des Formschlussbauteils relativ zur Aufnahme lösbar ist.

Der Verzahnungseingriff sorgt dafür, dass die Lichtaustrittsfläche in einer dem jeweiligen Anwendungsfall entsprechenden Teilung feinjustiert ausgerichtet werden kann und ein unbeabsichtigtes Lösen der Einstellung der Lichtaustrittsfläche vermieden werden kann, was insbesondere im Einsatz des erfindungsgemäßen Systems im landwirtschaftlichen Bereich von Bedeutung ist, da hierbei oftmals starke Stöße und Erschütterungen auftreten, welche auf den oder die Arbeitsscheinwerfer einwirken.

Es ist dabei nach einer Weiterbildung der Erfindung vorgesehen, dass das Formschlussbauteil eine langestreckte Konfiguration aufweist und relativ zur Aufnahme axial entlang eines Verlagerungswegs verlagerbar ausgebildet ist und eine Innenausnehmung besitzt, die mit einem Innengewinde versehen ist, dass mit einer Stellschraube in lösbaren Eingriff bringbar ist und mittels einer Veränderung der Überdeckung des Innengewindes und der Stellschraube der Verlagerungsweg veränderbar ist.

Über eine Axialverlagerung des Formschlussbauteils relativ zur Aufnahme kann der Verzahnungseingriff außer Eingriff gebracht werden und so der Arbeitsscheinwerfer beziehungsweise die Lichtaustrittsfläche des Arbeitsscheinwerfers entsprechend den Wünschen des Benutzers oder entsprechend dem jeweiligen Anwendungsfall eingestellt werden. Eine erneute Axialverlagerung des Formschlussbauteils führt wieder zur Herbeiführung des Verzahnungseingriffs und zur Festlegung des Arbeitsscheinwerfers beziehungsweise der Lichtaustrittsfläche des Arbeitsscheinwerfers relativ zur Umgebung beziehungsweise dem Arbeitsbereich.

Wird dann die Stellschraube wieder entlang des Innengewindes verschraubt, so kommt es zu einer Veränderung der Überdeckung des Innengewindes und der Stellschraube und der Verlagerungsweg des Formschlussbauteils kann so verändert werden, dass der Verzahnungseingriff außer Eingriff gebracht werden kann, um die Einstellung der Lichtaustrittsfläche vorzunehmen oder der Verzahnungseingriff wieder stattfindet, um die Lichtaustrittsfläche festzulegen und sodann über ein weiteres Verschrauben der Stellschraube ein unbeabsichtigtes Lösen des Formschlussbauteils relativ zur Aufnahme zu vermeiden und somit den Arbeitsscheinwerfer hinsichtlich seiner Lage zu fixieren, ohne dass die Gefahr eines unbeabsichtigten Lösens des Arbeitsscheinwerfers aus der so festgelegten Position besteht.

Es ist nach einer Weiterbildung der Erfindung vorgesehen, dass die Stellschraube mittels einer Federeinrichtung axial vorgespannt vorgesehen ist und die axiale Vorspannung das Formschlussbauteil zur lösbaren Aufrechterhaltung des Verzahnungseingriffs vorspannt.

Diese Konfiguration sorgt dafür, dass nach einem Lösen der Stellschraube das Formschlussbauteil einfach gegen die Federkraft der Federeinrichtung axial verlagert werden kann, beispielsweise durch eine entsprechende Beaufschlagung des Formschlussbauteils durch den Benutzer und sodann nach einem entsprechenden Einstellen der Relativposition der Lichtaustrittsfläche relativ zur Umgebung beziehungsweise dem Arbeitsbereich der Benutzer das Formschlussbauteil einfach nur loslassen muss, sodass über die Federkraft der Federeinrichtung das Formschlussbauteil wieder in seine Ausgangslage zurück bewegt wird, in der der Verzahnungseingriff stattfindet und somit eine Lagesicherung des Arbeitsscheinwerfers stattfindet und somit auch die eingestellte Ausrichtung des Arbeitsscheinwerfers beziehungsweise der Lichtaustrittsfläche des Arbeitsscheinwerfers relativ zum Arbeitsbereich fixiert wird.

Schließlich ist es nach einer Weiterbildung der Erfindung auch vorgesehen, dass die Teilung der Verzahnung derart ausgebildet ist, dass eine Einstellung der vertikalen Ausrichtung der Lichtaustrittsfläche des Arbeitsscheinwerfers in einer Teilung von 1 bis 25 Grad, vorzugsweise 2 bis 15 Grad, vorzugsweise 7 Grad vorgesehen ist.

Auf diese Weise ist eine feine Einstellbarkeit der Lichtaustrittsfläche des Arbeitsscheinwerfers relativ zum Arbeitsbereich ermöglicht und die erstrebte Vermeidung der Blendwirkung beziehungsweise Beeinträchtigung der Sichtverhältnisse des Benutzers relativ zum Arbeitsbereich kann erreicht werden.

Die Erfindung wird im Folgenden anhand der Zeichnung näher erläutert. Diese zeigt in:
Fig. 1 eine schematische Darstellung eines Systems in einer Ausführungsform gemäß der vorliegenden Erfindung, mit einer Arbeitsmaschine in der Form eines Traktors und einer Funktionsmaschine in der Form einer Rundballenpresse;
Fig. 2 eine Darstellung eines Arbeitsscheinwerfers in einer Ansicht von der Seite;
Fig. 3 eine Darstellung des Arbeitsscheinwerfers in einer Ansicht von hinten;
Fig. 4 eine Darstellung ähnlich derjenigen nach Fig. 3 zur Erläuterung einer Verzahnung im Bereich der Aufnahme;
Fig. 5 eine perspektivische Darstellung zur Erläuterung der Funktionsweise der Haltevorrichtung;
Fig. 6 eine Darstellung ähnlich derjenigen nach Fig. 4;
Fig. 7 eine weitere Darstellung des Arbeitsscheinwerfers in einer Ansicht von hinten;
Fig. 8 eine weitere Darstellung des Arbeitsscheinwerfers in einer Ansicht von hinten; und
Fig. 9 eine Darstellung des Arbeitsscheinwerfers in einer Ansicht von vorne.

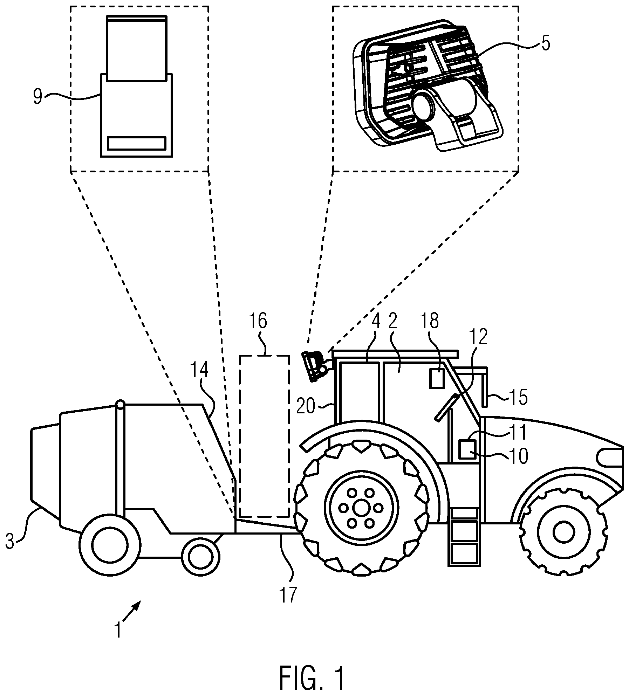

Fig. 1 der Zeichnung zeigt eine schematische Darstellung eines Systems 1 in einer Ausführungsform gemäß der vorliegenden Erfindung, mit einer Arbeitsmaschine 2 in der Form eines Traktors und einer Funktionsmaschine 3 in der Form einer Rundballenpresse.

Obwohl in Fig. 1 der Zeichnung ein System 1 aus dem Bereich der landwirtschaftlichen Anwendung dargestellt ist, ist die vorliegende Erfindung nicht auf diesen Anwendungsbereich beschränkt.

So ist es auch möglich, dass die Arbeitsmaschine eine Straßenbaumaschine sein kann und die Funktionsmaschine ein mit der Straßenbaumaschine gekoppelter Auflieger oder Anhänger oder dergleichen.

Ganz allgemein kann das erfindungsgemäße System auch in anderen Bereichen eingesetzt werden, in denen eine Sichtbehinderung des Benutzers des Systems zu befürchten ist, die beispielsweise von Reflexionen durch vom Arbeitsscheinwerfer emittiertes Licht hervorgerufen werden könnten.

Das erfindungsgemäße System 1 umfasst bei der dargestellten Ausführungsform einen am Führerhaus 4 der Arbeitsmaschine 2 angeordneten Arbeitsscheinwerfer 5, bei dem es sich bei der dargestellten Ausführungsform um einen Arbeitsscheinwerfer mit Leuchtdioden als Leuchtmittel handelt und der ein Gehäuse 39 aufweist.

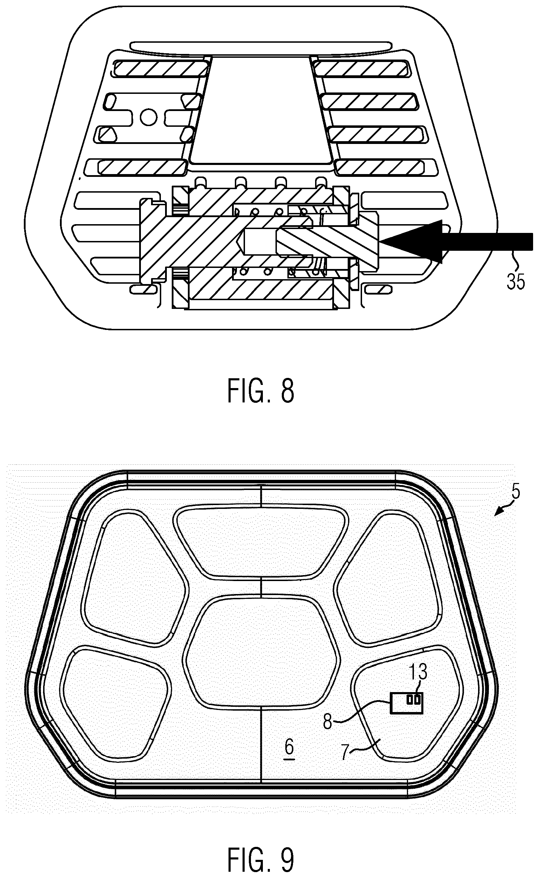

Eine schematische Darstellung eines solchen Arbeitsscheinwerfers 5 in einer Ansicht von vorne ist in Fig. 9 der Zeichnung ersichtlich, welche eine Lichtaustrittsfläche 6 zeigt, die sechs Segmente 7 aufweist mit jeweils einem LED-Chip 8, an dem auch mehrere Lichtemitter angeordnet sein können.

Wie es anhand von Fig. 1 darüber hinaus ersichtlich ist, umfasst das System 1 auch eine Datenspeichereinrichtung 9, welche der Darstellung halber in Fig. 1 als USB-Datenträger dargestellt ist, aber nicht hierauf beschränkt ist.

Die als Datenträger dargestellte Datenspeichereinrichtung 9 kann beispielsweise auch in der Form eines Funkschlüssels, RFID Chips, in einem Gehäuse integrierter CMOS Baustein oder eines anderen Datenspeichers ausgebildet sein, welche beispielsweise lösbar an der Funktionsmaschine 3 festgelegt werden kann, beispielsweise auch im Bereich einer Steuereinrichtung der Funktionsmaschine 3 integriert vorgesehen sein kann oder in einem die Funktionsmaschine 3 mit der Arbeitsmaschine 2 verbindenden Kabelsatz beziehungsweise einer Verbindungsleitung 17.

Der grundsätzliche Aufbau der Datenspeichereinrichtung 9 zeichnet sich dadurch aus, dass in wiederholter Weise Daten in die Datenspeichereinrichtung 9 geschrieben und aus dieser ausgelesen werden können.

Bei den als generischer Begriff als Daten bezeichneten Informationen kann es sich um ein Beleuchtungsprofil handeln, welches in der Form von Daten und/oder Anweisungen auf der Datenspeichereinrichtung 9 in wieder abrufbarer Weise gespeichert sind.

Diese Informationen können beispielsweise Anweisungen für eine in Fig. 1 der Zeichnung schematisch als Bauteil 10 dargestellte Steuerung umfassen, die Steuermittel 11 aufweist die zur Steuerung des Betriebs des Arbeitsscheinwerfers 5 eingerichtet und ausgebildet ist.

Ein Benutzer der Arbeitsmaschine 2 kann über eine an der Arbeitsmaschine 2 vorgesehene Eingabeeinrichtung 12 in der Form beispielsweise eines Touchscreens Daten und/oder Anweisungen zur Ansteuerung des Arbeitsscheinwerfers 5 in das Steuermittel 11 eingeben, die beispielsweise dazu vorgesehen sind, ein einzelnes Segment 7 des Arbeitsscheinwerfers 5 auszuschalten oder einzelne Lichtemitter 13 des Segments 7 auszuschalten, sodass ein von dem ausgewählten Segment 7 beziehungsweise den ausgewählten Lichtemittern 13 ansonsten im eingeschalteten Zustand von der Reflexionsfläche 14 der Funktionsmaschine 3 reflektiertes Licht nicht mehr reflektiert wird.

Damit wird erreicht, dass das ansonsten bei dem Benutzer des Traktors beziehungsweise der Arbeitsmaschine 2 als störend empfundene reflektierte Licht nicht mehr als störend empfunden wird, da von der Reflexionsfläche 14 kein Licht mehr reflektiert wird, welches vom Benutzer des Traktors 2 im Rückspiegel 15 oder ganz allgemein visuell als störend empfunden werden würde.

Der Benutzer kann also über eine entsprechende Ansteuerung der Steuermittel 11 dafür sorgen, dass das Segment 7 der Lichtaustrittsfläche 6 des Arbeitsscheinwerfers 5 ausgeschaltet bleibt auch dann, wenn der schematisch in Fig. 1 der Zeichnung dargestellte Arbeitsbereich 16 vom Arbeitsscheinwerfer 5 hell ausgestrahlt und erleuchtet wird und daher der Arbeitsbereich 16 vom Benutzer sehr gut visuell überprüft und überwacht werden kann, im Rückspiegel 15 ansonsten als störend empfundene Reflexionen des vom Arbeitsscheinwerfer 5 emittierten Lichts aber nicht mehr auftreten und daher das Auge des Benutzers auch nicht mehr gezwungen wird, ständig durch Reflexionen bedingte Adaptionen vornehmen zu müssen, welche die Überwachung des Arbeitsbereichs 16 grundsätzlich schwierig machen würden.

Der Benutzer des Systems 1 kann das für ihn passende Beleuchtungsprofil zur Ansteuerung des Arbeitsscheinwerfers 5 also über eine entsprechende Bedienung der Eingabevorrichtung 12 oder über eine Bedienung eines nicht näher dargestellten anderen Eingabegeräts in der Form beispielsweise eines Smartphones oder dergleichen erstellen und dieses Beleuchtungsprofil dann in die Datenspeichereinrichtung 9 übertragen und zwar über die in Fig. 1 der Zeichnung dargestellte elektrische Leitungsverbindung 17 zwischen der Arbeitsmaschine 2 und der Funktionsmaschine 3 oder auch eine Funkübertragungsstrecke.

Das so erstellte und auf die Datenspeichereinrichtung 9 übertragene Beleuchtungsprofil steht dann in wieder abrufbarer Weise in der Datenspeichereinrichtung 9 zur Verfügung und zwar beispielsweise in einer kodierten Form, welche auch noch Informationen betreffend den jeweiligen Benutzer der Arbeitsmaschine 2 umfasst, also in der Form von Informationen spezifisch für den jeweiligen Benutzer und spezifisch für die jeweils betroffene Funktionsmaschine 3.

Ein anderer Benutzer der Arbeitsmaschine 2 und Funktionsmaschine 3 kann ein vom zuerst genannten Benutzer abweichendes Beleuchtungsprofil bevorzugen und dieses über die beschriebene Weise in die Datenspeichereinrichtung 9 übertragen.

Über eine in Fig. 1 lediglich schematisch dargestellte Einrichtung 18 zur Benutzererkennung kann der die Arbeitsmaschine 2 aktuell nutzende Benutzer erfasst und erkannt werden und das von diesem bevorzugte Beleuchtungsprofil automatisch aus der Datenspeichereinrichtung 9 ausgelesen und in die Steuermittel 11 übertragen werden, sodass dann das vom zweitgenannten Benutzer bevorzugte Beleuchtungsprofil automatisch zur Verfügung steht, wenn beispielsweise ein Benutzerwechsel an der Arbeitsmaschine 2 durchgeführt worden ist.

Auf diese Weise wird auch ein kontinuierlicher Dauereinsatz der Arbeitsmaschine 2 und Funktionsmaschine 3 ermöglicht und ansonsten erforderliche, zeitintensive Einstellarbeiten oder Anpassungsarbeiten am Arbeitsscheinwerfer 5 zur Veränderung der von diesem erzeugten Lichtschemata können vermieden werden, wodurch die Effizienz und der Nutzungsgrad der Arbeitsmaschine und Funktionsmaschine steigt.

Wenn die in Fig. 1 der Zeichnung lediglich beispielshalber als Funktionsmaschine 3 dargestellte Rundballenpresse gegen eine andere Funktionsmaschine getauscht wird, beispielsweise eine Erntemaschine oder dergleichen, welche einen Arbeitsbereich aufweist, der von dem in Fig. 1 der Zeichnung dargestellten Arbeitsbereich 16 abweicht, können für die Erntemaschine spezifische Beleuchtungsprofile, welche auch Nutzerdaten der die Arbeitsmaschine 2 und die Erntemaschine benutzende Nutzer umfasst, nach der funktionalen Koppelung der Erntemaschine mit der Zugmaschine oder Arbeitsmaschine 2 automatisiert in die Steuermittel 11 übertragen werden und stehen dann sofort auch nutzerselektiv zur Ansteuerung des Arbeitsscheinwerfers 5 entsprechend den übertragenen Beleuchtungsprofilen zur Verfügung.

Aufwändige Einstellarbeiten zur Herbeiführung entsprechender, vom Arbeitsscheinwerfer 5 erzeugter Beleuchtungsschemata werden auf diese Weise vermieden.

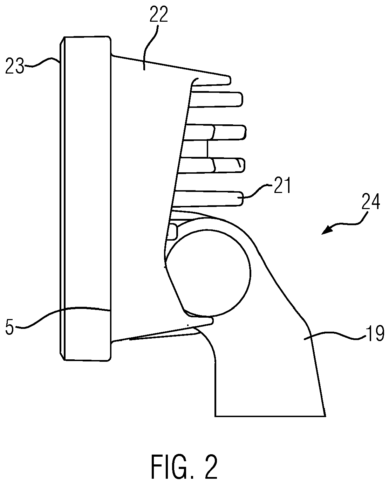

Fig. 2 der Zeichnung zeigt eine Ansicht des Arbeitsscheinwerfers 5 in einer Ansicht von der Seite mit einem ebenfalls nur schematisch dargestellten Montagerahmen 19, mit dem der Arbeitsscheinwerfer 5 an der Rückwand 20 des Führerhauses 4 festgelegt werden kann.

Wie es ohne weiteres ersichtlich ist, weist der Arbeitsscheinwerfer 5 mehrere Kühlrippen 21 auf und besitzt eine Kühlrippe 22 im Bereich der Oberseite 23 des Arbeitsscheinwerfers 5, welche die Rückseite 24 und die daran angeordneten Kühlrippen 21 weitgehend überdeckt in der Form eines Vorsprungs oder eines Daches, sodass der Eintrag von Verschmutzungen in den Bereich der Kühlrippen 21 weitgehend vermieden werden kann.

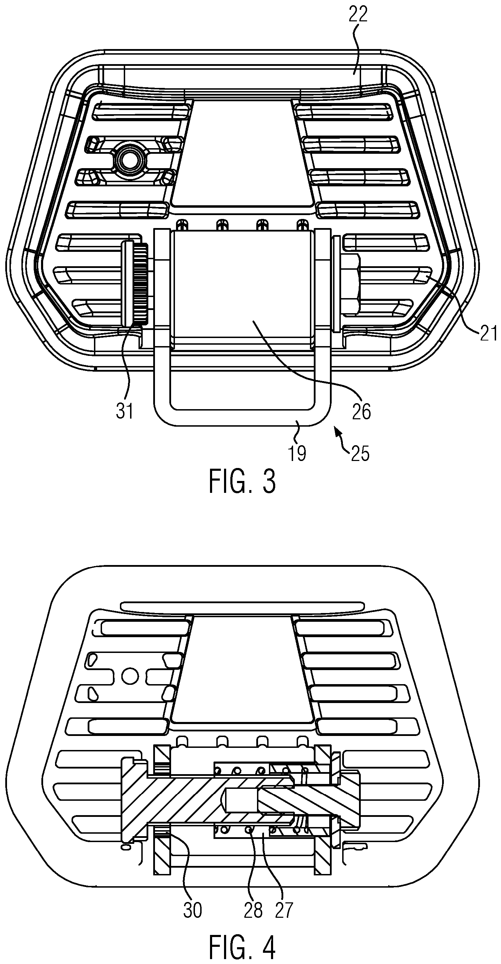

Fig. 3 der Zeichnung zeigt eine Darstellung des Arbeitsscheinwerfers 5 in einer Ansicht von hinten, welche wiederum den Montagerahmen 19 zeigt und die Kühlrippen 21 sowie die als Überdeckung ausgebildete Kühlrippe 22, welche dem Schutz gegen Verschmutzungen dient.

Fig. 3 zeigt auch eine Haltevorrichtung 25 zur lösbaren Festlegung des Arbeitsscheinwerfers 5 an einem nicht näher dargestellten Träger der Arbeitsmaschine 2, der an der Rückwand 20 der Arbeitsmaschine 2 angeordnet ist.

Fig. 3 der Zeichnung zeigt auch eine Aufnahme 26, welche an der Rückseite oder Rückwand 24 des Arbeitsscheinwerfers 5 vorgesehen ist.

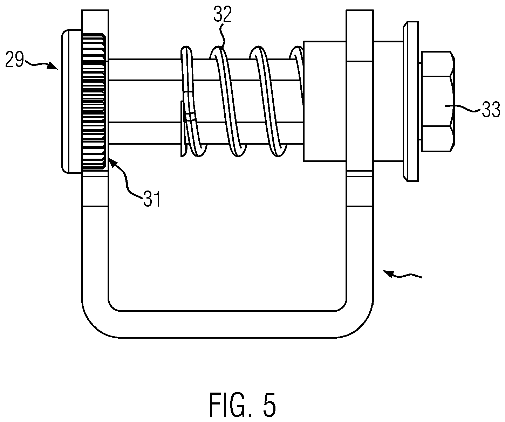

Fig. 4 zeigt eine Teilschnittdarstellung der Aufnahme 26 mit einer an der Aufnahme 26 ausgebildeten Innenausnehmung 27, die einen Aufnahmeraum 28 für das näher anhand von Fig. 5 der Zeichnung ersichtliche Formschlussbauteil darstellt.

Wie es anhand von Fig. 4 der Zeichnung ersichtlich ist, besitzt die Aufnahme 26 einen Zahnkranz oder Verzahnung 30, welche mit einer am Formschlussbauteil 29 vorgesehenen, und in Fig. 3 der Zeichnung ersichtlichen Verzahnung 31 in einen Verzahnungseingriff gebracht werden kann, welcher der vertikalen Ausrichtung der Lichtaustrittsfläche 6 beziehungsweise der Winkeleinstellung der Lichtaustrittsfläche 6 relativ beispielsweise zur Rückwand 20 der Arbeitsmaschine 2 dient, um auf den Arbeitsbereich 16 ausgerichtet werden zu können.

Hierzu kann die Verzahnung 31 des Formschlussbauteils 29 von dem Verzahnungseingriff mit dem Zahnkranz 30 der Aufnahme 26 - der anhand von Fig. 5 der Zeichnung ersichtlich ist - gelöst werden, wie dies nachfolgend noch erläutert werden wird.

Fig. 5 zeigt ein Beispiel der Teilung der Verzahnung 30 beziehungsweise 31 in der Form von 7 Grad, sodass eine Feinjustierung der Lichtaustrittsfläche 6 in Schritten von 7 Grad relativ zur Vertikalen möglich ist und damit eine Feinjustage der Lichtaustrittsfläche 6 möglich ist, um die Lichtabstrahlung des Arbeitsscheinwerfers 5 auf den Arbeitsbereich 16 ausrichten zu können.

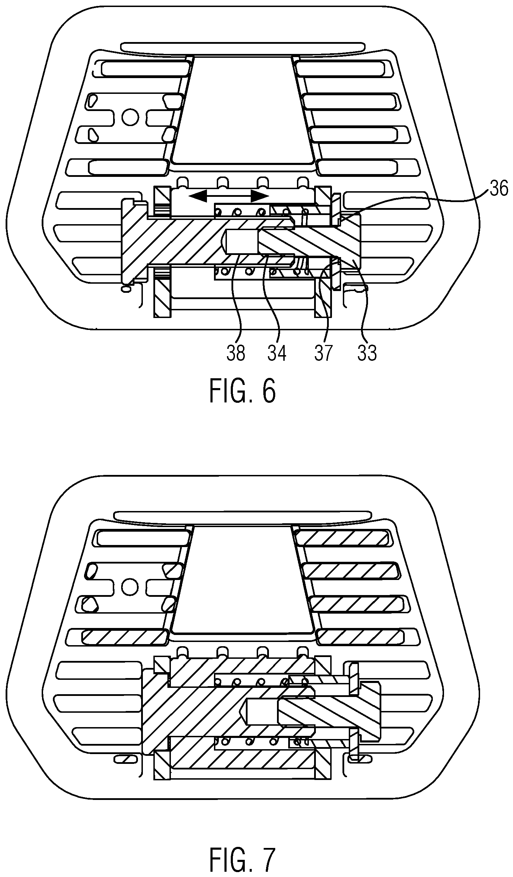

Wie es anhand von Fig. 5 der Zeichnung zudem ersichtlich ist, ist eine Schraubendruckfeder 32 vorgesehen, welche eine Stellschraube 33, die auch beispielsweise anhand von Fig. 6 der Zeichnung ersichtlich ist, axial beaufschlagt.

Diese axiale Beaufschlagung der Stellschraube 33 sorgt dafür, dass das Formschlussbauteil 29 in der Zeichnungsebene der Fig. 6 in Richtung nach rechts beaufschlagt wird, sodass der Verzahnungseingriff zwischen dem Zahnkranz 30 und der Verzahnung 31 herbeigeführt wird und eine selbstständige Veränderung der Winkelstellung der Lichtaustrittsfläche 6 relativ zur Vertikalen vermieden wird.

Die Stellschraube 33 befindet sich mit ihrem Außengewinde 34 im Eingriff mit einem Innengewinde 38 des Formschlussbauteils 29, sodass über diesen Gewindeeingriff die axiale Beaufschlagung der Stellschraube 33 zu einer axialen Verlagerungsbewegung des Formschlussbauteils 29 in Richtung nach rechts gemäß Fig. 6 der Zeichnung führt und auf diese Weise der Verzahnungseingriff herbeigeführt wird.

Um die Winkelstellung der Lichtaustrittsfläche 6 verändern zu können, wird die Stellschraube 33 aus der in Fig. 3 der Zeichnung gezeigten vollständig eingeschraubten Stellung gelöst zur Herbeiführung der in Fig. 6 der Zeichnung gezeigten Stellung, welche auch noch mal anhand von Fig. 8 der Zeichnung ersichtlich ist und durch eine Kraftbeaufschlagung der Stellschraube 33 in Richtung des Pfeils 35 nach Fig. 8 der Zeichnung durch den Benutzer kann der Verzahnungseingriff zwischen der Verzahnung 30 und der Verzahnung 31 gelöst werden und die Winkelstellung der Lichtaustrittsfläche 6 relativ zur Vertikalen verändert werden und wenn dann nach dieser gewünschten Veränderung der Winkelstellung der Benutzer die Kraftbeaufschlagung in Richtung des Pfeils 35 einstellt, führt die Kraftbeaufschlagung der Stellschraube 33 durch die Federeinrichtung 32 dazu, dass die beiden Verzahnungen 30, 31 wieder in Verzahnungseingriff gelangen und auf diese Weise die Winkelstellung der Lichtaustrittsfläche 6 relativ zur Vertikalen festgelegt ist.

Danach wird die Stellschraube 33 vom Benutzer wieder in Richtung des Formschlussbauteils 29 verschraubt und es kommt zum Aufliegen des Bundes 36 der Stellschraube 33 an der Stirnfläche 37 der Aufnahme, wodurch eine Lagefixierung der Haltevorrichtung 25 herbeigeführt wird und eine selbsttätige Veränderung der Winkelstellung der Lichtaustrittsfläche 6 des Arbeitsscheinwerfers 5 auch bei starken Stößen der Arbeitsmaschine 2 in deren Betrieb auf einer rauen Oberfläche, wie beispielsweise einem Acker oder dergleichen, vermieden wird.

Das erfindungsgemäße System zeichnet sich nun dadurch aus, dass eine Beeinflussung des Benutzers durch vom Arbeitsscheinwerfer emittiertes Licht in der Form von Reflexionstrahlungen oder dergleichen sicher vermieden werden können und auch dadurch, dass die zur gewünschten guten Ausleuchtung des Arbeitsbereichs benötigte Lagefixierung des Arbeitsscheinwerfers auch bei starken stoßartigen Belastungen sicher erreicht wird.

Hinsichtlich vorstehend im Einzelnen nicht näher erläuterter Merkmale der Erfindung wird im Übrigen ausdrücklich auf die Patentansprüche und die Zeichnung verwiesen.

### Bezugszeichenliste

- 1.: System
- 2.: Arbeitsmaschine
- 3.: Funktionsmaschine
- 4.: Führerhaus
- 5.: Arbeitsscheinwerfer
- 6.: Lichtaustrittsfläche
- 7.: Segment
- 8.: LED Chip
- 9.: Datenspeichereinrichtung
- 10.: Bauteil, Steuerung
- 11.: Steuermittel
- 12.: Eingabevorrichtung
- 13.: Lichtemitter
- 14.: Reflexionsfläche
- 15.: Rückspiegel
- 16.: Arbeitsbereich
- 17.: Leitungsverbindung
- 18.: Einrichtung
- 19.: Montagerahmen
- 20.: Rückwand
- 21.: Kühlrippe
- 22.: Kühlrippe
- 23.: Oberseite
- 24.: Rückseite, Rückwand
- 25.: Haltevorrichtung
- 26.: Aufnahme
- 27.: Innenausnehmung
- 28.: Aufnahmeraum
- 29.: Formschlussbauteil
- 30.: Zahnkranz, Verzahnung
- 31.: Verzahnung
- 32.: Schraubendruckfeder
- 33.: Stellschraube
- 34.: Außengewinde
- 35.: Pfeil
- 36.: Bund
- 37.: Stirnfläche
- 38.: Innengewinde
- 39.: Gehäuse

## Patentansprüche

1. System (1) mit einer Steuerung eines Arbeitsscheinwerfers (5) einer Arbeitsmaschine, insbesondere einer landwirtschaftlichen Arbeitsmaschine, wobei das System umfasst:
- die eine Arbeitsmaschine (2) mit mindestens einem Arbeitsscheinwerfer (5), der zur Beleuchtung eines von einem Benutzer der Arbeitsmaschine (2) zu überwachenden Arbeitsbereichs (16) vorgesehen ist
- eine mit der Arbeitsmaschine (2) funktional zu koppelnde, insbesondere landwirtschaftliche Funktionsmaschine (3)
- Steuerungsmittel (11) zur Steuerung des Betriebs des Arbeitsscheinwerfers (5)
- eine Datenspeichereinrichtung (9), die zur Speicherung eines Beleuchtungsprofils eingerichtet ist, wobei das Beleuchtungsprofil Daten und/oder Anweisungen umfasst, welche zur Übertragung an die Steuerungsmittel (11) vorgesehen sind und die Steuerungsmittel (11) den mindestens einen Arbeitsscheinwerfer (5) zur Beleuchtung des Arbeitsbereichs (16) entsprechend dem Beleuchtungsprofil ansteuern,
**dadurch gekennzeichnet, dass** die Datenspeichereinrichtung (9) zur Speicherung unterschiedlicher Beleuchtungsprofile eingerichtet ist, die unterschiedlichen Benutzern des Systems (1) zugeordnet sind.

2. System (1) nach Anspruch 1, **dadurch gekennzeichnet, dass** die Steuerungsmittel (11) an der Arbeitsmaschine (2) und/oder der Funktionsmaschine (3) angeordnet sind.

3. System (1) nach Anspruch 1 oder 2, **dadurch gekennzeichnet, dass** die Datenspeichereinrichtung (9) funktional mit der Funktionsmaschine (3) gekoppelt ist derart, dass das Beleuchtungsprofil bei einer funktionalen Trennung der Funktionsmaschine (3) von der Arbeitsmaschine (2) erhalten bleibt.

4. System (1) nach einem der vorstehenden Ansprüche, **dadurch gekennzeichnet, dass** das System (1) zur automatischen Übertragung des Beleuchtungsprofils bei der Erstellung einer funktionalen Koppelung der Funktionsmaschine (3) mit der Arbeitsmaschine (2) an die Steuermittel (11) ausgebildet ist.

5. System (1) nach einem der vorstehenden Ansprüche, **dadurch gekennzeichnet, dass** die Datenspeichereinrichtung (9) zur Übertragung mindestens eines Beleuchtungsprofils von den Steuerungsmitteln (11) auf die Datenspeichereinrichtung (9) und zur Speicherung des mindestens einen Beleuchtungsprofils auf der Datenspeichereinrichtung (9) ausgebildet ist.

6. System (1) nach einem der vorstehenden Ansprüche, **dadurch gekennzeichnet, dass** die Datenspeichereinrichtung (9) einen mit der Funktionsmaschine (3) gekoppelten, nicht-flüchtigen Datenspeicher aufweist, der an einem Aufbau der Funktionsmaschine (3) oder an einer funktionalen, insbesondere elektrischen Verbindungseinrichtung (17) der Funktionsmaschine (3) angeordnet ist, die zur Koppelung der Funktionsmaschine (3) mit der Arbeitsmaschine (2) vorgesehen ist.

7. System (1) nach einem der vorstehenden Ansprüche, **dadurch gekennzeichnet, dass** der Arbeitsscheinwerfer (5) zur Beleuchtung des Arbeitsbereichs (16) entsprechend dem Beleuchtungsprofil ausgebildet ist und mindestens zwei, mit mindestens einem jeweiligen Leuchtmittel (8) versehene Segmente (7) aufweist und die Segmente (7) und/oder die Leuchtmittel (8) der Segmente (7) getrennt von anderen Segmenten (7) und/oder Leuchtmitteln (8) der Segmente (7) zur Emission von Licht ansteuerbar sind.

8. System (1) nach einem der vorstehenden Ansprüche, **dadurch gekennzeichnet, dass** der mindestens eine Arbeitsscheinwerfer (5) ein LED-Arbeitsscheinwerfer (5) mit mindestens zwei Segmenten (7) mit mindestens einer jeweiligen Leuchtdiode pro Segment (7) ist.

9. System (1) nach einem der vorstehenden Ansprüche, **dadurch gekennzeichnet, dass** die Steuerungsmittel (11) zur selektiven Ansteuerung des mindestens einen Arbeitsscheinwerfers (5) ausgebildet sind derart, dass Segmente (7) und/oder Leuchtdioden von Segmenten (7) zur Herbeiführung eines Beleuchtungsprofils selektiv abschaltbar sind und Segmente (7) und/oder Leuchtdioden von Segmenten (7) selektiv zur Emission einer die Nennleistung pro Leuchtdiode übersteigenden Lichtleistung übersteuerbar sind.

10. System (1) nach einem der vorstehenden Ansprüche, **dadurch gekennzeichnet, dass** der mindestens eine Arbeitsscheinwerfer (5) ein Gehäuse (39) mit in bestimmungsgemäßer Ausrichtung des Arbeitsscheinwerfers an der Arbeitsmaschine zumindest weitgehend horizontal angeordneten Kühlrippen aufweist.

11. System (1) nach einem der vorstehenden Ansprüche, **dadurch gekennzeichnet, dass** die Steuerungsmittel (11) zur Ansteuerung der Leuchtmittel mit einem vorbestimmten Teil der Nennleistung der Leuchtmittel ausgebildet sind und der vorbestimmte Teil kleinergleich der Nennleistung der Leuchtmittel ist.

12. System (1) nach einem der vorstehenden Ansprüche, **dadurch gekennzeichnet, dass** der Arbeitsscheinwerfer (5) eine Einrichtung zur Einstellung der vertikalen Ausrichtung der Lichtaustrittsfläche (6) des Arbeitsscheinwerfers (5) aufweist, und die Einrichtung eine Haltevorrichtung (25) zur lösbaren Festlegung des Arbeitsscheinwerfers (5) an einem Träger und ein Formschlussbauteil (29) aufweist, welches mit einer an einem Gehäuse (39) des Arbeitsscheinwerfers (5) vorgesehenen und form- und flächenkomplementär zum ersten Formschlussbauteil vorgesehenen Abschnitt der Aufnahme (26) zusammenwirkt.

13. System (1) nach Anspruch 12, **dadurch gekennzeichnet, dass** die Haltevorrichtung (25) eine an der Aufnahme (26) vorgesehene Verzahnung (30) umfasst, welche mit einer an dem Formschlussbauteil (29) vorgesehenen Verzahnung (31) in lösbarem Eingriff steht und der Verzahnungseingriff mittels einer Axialverlagerung des Formschlussbauteils (29) relativ zur Aufnahme (26) lösbar ist.

14. System (1) nach Anspruch 12 oder 13, **dadurch gekennzeichnet, dass** das Formschlussbauteil (29) eine langgestreckte Konfiguration aufweist und relativ zur Aufnahme (26) axial entlang eines Verlagerungswegs verlagerbar ausgebildet ist und eine Innenausnehmung (27) besitzt, die mit einem Innengewinde (38) versehen ist, das mit einer Stellschraube (33) in lösbaren Eingriff bringbar ist und mittels einer Veränderung der Überdeckung des Innengewindes (38) und der Stellschraube (33) der Verlagerungsweg veränderbar ist.

15. System (1) nach Anspruch 14, **dadurch gekennzeichnet, dass** die Stellschraube (33) mittels einer Federeinrichtung (32) axial vorgespannt vorgesehen ist und die axiale Vorspannung das Formschlussbauteil (29) zur lösbaren Aufrechterhaltung des Verzahnungseingriffs vorspannt.

16. System (1) nach einem der Ansprüche 13 bis 15, **dadurch gekennzeichnet, dass** die Teilung der Verzahnung (30, 31) derart ausgebildet ist, dass eine Einstellung der vertikalen Ausrichtung der Lichtaustrittsfläche (6) des Arbeitsscheinwerfers (5) in einer Teilung von 1 bis 25 Grad, vorzugsweise 2 bis 15 Grad, vorzugsweise 7 Grad vorgesehen ist.

17. System (1) zur Steuerung eines Arbeitsscheinwerfers (5) für eine Arbeitsmaschine (2) und eine funktional mit der Arbeitsmaschine (2) zu koppelnde Funktionsmaschine (3), wobei das System mindestens einen Arbeitsscheinwerfer (5) aufweist, der zur Beleuchtung eines von einem Benutzer des Systems zu überwachenden Arbeitsbereichs (16) vorgesehen ist und das System auch Steuerungsmittel (11) zur Steuerung des Betriebs des Arbeitsscheinwerfers (5) umfasst und das System eine Datenspeichereinrichtung (9) aufweist, die zur Speicherung eines Beleuchtungsprofils eingerichtet ist, wobei das Beleuchtungsprofil Daten und/oder Anweisungen umfasst, welche zur Übertragung an die Steuerungsmittel (11) vorgesehen sind und die Steuerungsmittel (11) den mindestens einen Arbeitsscheinwerfer (5) zur Beleuchtung des Arbeitsbereichs (16) entsprechend dem Beleuchtungsprofil ansteuern, **dadurch gekennzeichnet, dass** die Datenspeichereinrichtung (9) zur Speicherung unterschiedlicher Beleuchtungsprofile eingerichtet ist, die unterschiedlichen Benutzern des Systems (1) zugeordnet sind.

18. System nach Anspruch 17, **dadurch gekennzeichnet, dass** der Arbeitsscheinwerfer (5) eine Einrichtung zur Einstellung der vertikalen Ausrichtung der Lichtaustrittsfläche (6) des Arbeitsscheinwerfers (5) aufweist, und die Einrichtung eine Haltevorrichtung (25) zur lösbaren Festlegung des Arbeitsscheinwerfers (5) an einem Träger und ein Formschlussbauteil (29) aufweist, welches mit einem an einem Gehäuse (39) des Arbeitsscheinwerfers (5) vorgesehenen und form- und flächenkomplementär zum ersten Formschlussbauteil vorgesehenen Abschnitt der Aufnahme (26) zusammenwirkt.

19. System nach Anspruch 18, **dadurch gekennzeichnet, dass** die Haltevorrichtung (25) eine an der Aufnahme (26) vorgesehene Verzahnung (30) umfasst, welche mit einer an dem Formschlussbauteil (29) vorgesehenen Verzahnung (31) in lösbarem Eingriff steht und der Verzahnungseingriff mittels einer Axialverlagerung des Formschlussbauteils (29) relativ zur Aufnahme (26) lösbar ist.

20. System nach Anspruch 18 oder 19, **dadurch gekennzeichnet, dass** das Formschlussbauteil (29) eine langgestreckte Konfiguration aufweist und relativ zur Aufnahme (26) axial entlang eines Verlagerungswegs verlagerbar ausgebildet ist und eine Innenausnehmung (27) besitzt, die mit einem Innengewinde (38) versehen ist, das mit einer Stellschraube (33) in lösbaren Eingriff bringbar ist und mittels einer Veränderung der Überdeckung des Innengewindes (38) und der Stellschraube (33) der Verlagerungsweg veränderbar ist.

21. System nach Anspruch 20, **dadurch gekennzeichnet, dass** die Stellschraube (33) mittels einer Federeinrichtung (32) axial vorgespannt vorgesehen ist und die axiale Vorspannung das Formschlussbauteil (29) zur lösbaren Aufrechterhaltung des Verzahnungseingriffs vorspannt.

22. System nach einem der Ansprüche 19 bis 21, **dadurch gekennzeichnet, dass** die Teilung der Verzahnung (30, 31) derart ausgebildet ist, dass eine Einstellung der vertikalen Ausrichtung der Lichtaustrittsfläche (6) des Arbeitsscheinwerfers (5) in einer Teilung von 1 bis 25 Grad, vorzugsweise 2 bis 15 Grad, vorzugsweise 7 Grad vorgesehen ist.

## Claims

1. System (1) having a control device of a work light (5) of a work machine, in particular of an agricultural work machine, wherein the system comprises:
- the work machine (2) having at least one work light (5), which is provided to illuminate a work region (16) to be monitored by a user of the work machine (2)
- a functional machine (3), in particular an agricultural functional machine (3), to be functionally coupled with the work machine (2)
- control means (11) for controlling the operation of the work light (5)
- a data storage device (9), which is equipped to store an illumination profile, wherein the illumination profile comprises data and/or instructions, which are provided for transmission to the control means (11) and the control means (11) direct the at least one work light (5) to illuminate the work region (16) corresponding to the illumination profile,
**characterised in that** the data storage device (9) is equipped to store different illumination profiles, which are assigned to different users of the system (1).

2. System (1) according to claim 1, **characterised in that** the control means (11) are arranged on the work machine (2) and/or on the functional machine (3).

3. System (1) according to claim 1 or 2, **characterised in that** the data storage device (9) is functionally coupled with the functional machine (3) such that the illumination profile is maintained when the functional machine (3) is functionally split from the work machine (2).

4. System (1) according to one of the preceding claims, **characterised in that** the system (1) is designed to automatically transmit the illumination profile to the control means (11) when producing a functional coupling of the functional machine (3) with the work machine (2).

5. System (1) according to one of the preceding claims, **characterised in that** the data storage device (9) is designed to transmit the at least one illumination profile from the control means (11) to the data storage device (9), and to store the at least one illumination profile on the data storage device (9).

6. System (1) according to one of the preceding claims, **characterised in that** the data storage device (9) has a non-volatile data storage device, which is coupled with the functional machine (3), and which is arranged on a structure of the functional machine (3) or on a functional, in particular electrical connecting device (17) of the functional machine (3), which is provided to couple the functional machine (3) with the work machine (2).

7. System (1) according to one of the preceding claims, **characterised in that** the work light (5) is designed to illuminate the work region (16) corresponding to the illumination profile, and has at least two segments (7) provided with at least one respective lighting means (8), and that the segments (7) and/or the lighting means (8) of the segments (7) can be directed to emit light separately from other segments (7) and/or lighting means (8) of the segments (7).

8. System (1) according to one of the preceding claims, **characterised in that** the at least one work light (5) is an LED work light (5) having at least two segments (7) having at least one respective light diode per segment (7).

9. System (1) according to one of the preceding claims, **characterised in that** the control means (11) are designed to selectively control the at least one work light (5) such that segments (7) and/or light diodes of segments (7) can be selectively switched off to effect an illumination profile, and segments (7) and/or light diodes of segments (7) can be selectively overridden to emit a light power which exceeds the nominal power per light diode.

10. System (1) according to one of the preceding claims, **characterised in that** the at least one work light (5) has a housing (39) having cooling ribs arranged at least substantially horizontally on the work machine when the work light is aligned as intended.

11. System (1) according to one of the preceding claims, **characterised in that** the control means (11) are designed to control the lighting means with a pre-determined part of the nominal power of the lighting means, and the pre-determined part is less than or equal to the nominal power of the lighting means.

12. System (1) according to one of the preceding claims, **characterised in that** the work light (5) has an apparatus for adjusting the vertical alignment of the light-emitting surface (6) of the work light (5), and the apparatus has a retaining device (25) for releasably fixing the work light (5) to a carrier and a form-fit component (29), which interacts with a portion of the receptacle (26) provided on a housing (39) of the work light (5) and provided such that it is complementary in its shape and surface to the first form-fit component.

13. System (1) according to claim 12, **characterised in that** the retaining device (25) comprises a gearing (30) provided on the receptacle (26), which is in releasable engagement with a gearing (31) provided on the form-fit component (29), and the gearing engagement can be released by means of an axial displacement of the form-fit component (29) relative to the receptacle (26).

14. System (1) according to claim 12 or 13, **characterised in that** the form-fit component (29) has an elongated configuration, and is designed such that it can be axially displaced along a displacement path relative to the receptacle (26), and has an inner recess (27), which is provided with an inner thread (28) that can be brought into releasable engagement with an adjusting screw (33), and the displacement path can be changed by changing the overlap of the inner thread (38) and the adjusting screw (33).

15. System (1) according to claim 14, **characterised in that** the adjusting screw (33) is provided such that it is axially pre-tensioned by means of a spring device (32) and the axial pre-tensioning pre-tensions the form-fit component (29) to releasably maintain the toothing engagement.

16. System (1) according to one of claims 13 to 15, **characterised in that** the division of the gearing (30, 31) is designed such that an adjustment of the vertical alignment of the light-emitting surface (6) of the work light (5) is provided in a division of 1 to 25 degrees, preferably 2 to 15 degrees, preferably 7 degrees.

17. System (1) for controlling a work light (5) for a work machine (2) and a functional machine (3) to be functionally coupled with the work machine (2), wherein the system has at least one work light (5), which is provided to illuminate a work region (16) to be monitored by a user of the system, and the system also comprises control means (11) for controlling the operation of the work light (5), and the system has a data storage device (9), which is equipped to store an illumination profile, wherein the illumination profile comprises data and/or instructions, which are provided for transmission to the control means (11) and the control means (11) direct the at least one work light (5) to illuminate the work region (16) corresponding to the illumination profile, **characterised in that** the data storage device (9) is equipped to store different illumination profiles, which are assigned to different users of the system (1).

18. System according to claim 17, **characterised in that** the work light (5) has an apparatus for adjusting the vertical alignment of the light-emitting surface (6) of the work light (5), and the apparatus has a retaining device (25) for releasably fixing the work light (5) to a carrier and a form-fit component (29), which interacts with a portion of the receptacle (26) provided on a housing (39) of the work light (5) and provided such that it is complementary in its shape and surface to the first form-fit component.

19. System according to claim 18, **characterised in that** the retaining device (25) comprises a gearing (30) provided on the receptable (26), which gearing is in releasable engagement with a gearing (31) provided on the form-fit component (29), and that the toothing engagement can be released by means of an axial displacement of the form-fit component (29) relative to the receptable (26).

20. System according to claim 18 or 19, **characterised in that** the form-fit component (29) has an elongated configuration, and is designed such that it can be axially displaced along a displacement path relative to the receptable (26), and has an inner recess (27), which is provided with an inner thread (38) that can be brought into releasable engagement with an adjusting screw (33) and the displacement path can be changed by changing the overlap of the inner thread (38) and the adjusting screw (33).

21. System according to claim 20, **characterised in that** the adjusting screw (33) is provided such that it is axially pre-tensioned by means of a spring device (32) and the axial pre-tensioning pre-tensions the form-fit component (29) to releasably maintain the toothing engagement.

22. System according to one of claims 19 to 21, **characterised in that** the division of the gearing (30, 31) is designed such that an adjustment of the vertical alignment of the light-emitting surface (6) of the work light (5) is provided in a division of 1 to 25 degrees, preferably 2 to 15 degrees, preferably 7 degrees.

## Revendications

1. Système (1) doté d'une commande d'un projecteur de travail (5) d'une machine de travail, notamment d'une machine de travail agricole, le système comprenant :
- ladite machine de travail (2), dotée d'au moins un projecteur de travail (5) prévu pour éclairer une zone de travail (16) à surveiller par un utilisateur de la machine de travail (2),
- une machine fonctionnelle (3), notamment agricole, à coupler fonctionnellement à la machine de travail (2),
- des moyens de commande (11) permettant de commander le fonctionnement du projecteur de travail (5),
- un dispositif de stockage de données (9) conçu pour le stockage d'un profil d'éclairage, ledit profil d'éclairage comprenant des données et/ou des instructions qui sont prévues pour être transmises aux moyens de commande (11) et lesdits moyens de commande (11) commandant l'au moins un projecteur de travail (5) pour éclairer la zone de travail (16) conformément au profil d'éclairage,
**caractérisé en ce que** le dispositif de stockage de données (9) est conçu pour stocker différents profils d'éclairage associés à différents utilisateurs du système (1).

2. Système (1) selon la revendication 1, **caractérisé en ce que** les moyens de commande (11) sont agencés sur la machine de travail (2) et/ou sur la machine fonctionnelle (3).

3. Système (1) selon la revendication 1 ou 2, **caractérisé en ce que** le dispositif de stockage de données (9) est couplé de manière fonctionnelle à la machine fonctionnelle (3) de façon à conserver le profil d'éclairage en cas de déconnexion fonctionnelle entre la machine fonctionnelle (3) et la machine de travail (2).

4. Système (1) selon l'une des revendications précédentes, **caractérisé en ce que** le système (1) est conçu pour transmettre automatiquement le profil d'éclairage aux moyens de commande (11) lors de l'établissement d'un couplage fonctionnel de la machine fonctionnelle (3) avec la machine de travail (2).

5. Système (1) selon l'une des revendications précédentes, **caractérisé en ce que** le dispositif de stockage de données (9) est conçu pour transmettre au moins un profil d'éclairage des moyens de commande (11) au dispositif de stockage de données (9) et pour stocker ledit au moins un profil d'éclairage sur le dispositif de stockage de données (9).

6. Système (1) selon l'une des revendications précédentes, **caractérisé en ce que** le dispositif de stockage de données (9) présente une mémoire de données non volatile couplée à la machine fonctionnelle (3) et agencée sur une structure de la machine fonctionnelle (3) ou sur un dispositif de connexion (17) fonctionnel, notamment électrique, de la machine fonctionnelle (3), prévu pour coupler la machine fonctionnelle (3) à la machine de travail (2).

7. Système (1) selon l'une des revendications précédentes, **caractérisé en ce que** le projecteur de travail (5) est conçu pour éclairer la zone de travail (16) conformément au profil d'éclairage et présente au moins deux segments (7) munis d'au moins un moyen d'éclairage (8) respectif, et les segments (7) et/ou les moyens d'éclairage (8) desdits segments (7) peuvent être commandés séparément d'autres segments (7) et/ou moyens d'éclairage (8) desdits segments (7) pour émettre de la lumière.

8. Système (1) selon l'une des revendications précédentes, **caractérisé en ce que** l'au moins un projecteur de travail (5) est un projecteur de travail à LED (5) doté d'au moins deux segments (7) comportant au moins une diode électroluminescente respective par segment (7).

9. Système (1) selon l'une des revendications précédentes, **caractérisé en ce que** les moyens de commande (11) sont conçus pour commander sélectivement l'au moins un projecteur de travail (5) de telle façon que des segments (7) et/ou des diodes électroluminescentes desdits segments (7) peuvent être éteints sélectivement pour produire un profil d'éclairage, et des segments (7) et/ou des diodes électroluminescentes desdits segments (7) peuvent être commandés sélectivement en surcharge pour émettre une puissance lumineuse dépassant la puissance nominale pour chaque diode électroluminescente.

10. Système (1) selon l'une des revendications précédentes, **caractérisé en ce que** l'au moins un projecteur de travail (5) comprend un boîtier (39) doté, dans l'orientation conforme du projecteur de travail sur la machine de travail, d'ailettes de refroidissement disposées, au moins pour l'essentiel, à l'horizontale.

11. Système (1) selon l'une des revendications précédentes, **caractérisé en ce que** les moyens de commande (11) sont conçus pour commander les moyens d'éclairage avec une partie prédéterminée de la puissance nominale des moyens d'éclairage et **en ce que** la partie prédéterminée est inférieure ou égale à la puissance nominale des moyens d'éclairage.

12. Système (1) selon l'une des revendications précédentes, **caractérisé en ce que** le projecteur de travail (5) comporte un dispositif de réglage de l'orientation verticale de la surface de sortie de lumière (6) du projecteur de travail (5), et le dispositif comporte un dispositif de maintien (25) permettant de fixer de manière temporaire le projecteur de travail (5) sur un support ainsi qu'un élément à complémentarité de forme (29) coopérant avec une portion du réceptacle (26) qui est prévue sur un boîtier (39) du projecteur de travail (5) et qui est complémentaire, en forme et en superficie, du premier élément à complémentarité de forme.

13. Système (1) selon la revendication 12, **caractérisé en ce que** le dispositif de retenue (25) comprend une denture (30) prévue sur le réceptacle (26) et en engrènement temporaire avec une denture (31) prévue sur l'élément à complémentarité de forme (29) et l'engrènement de la denture peut être libéré au moyen d'un déplacement axial de l'élément à complémentarité de forme (29) par rapport au réceptacle (26).

14. Système (1) selon la revendication 12 ou 13, **caractérisé en ce que** l'élément à complémentarité de forme (29) présente une configuration allongée, peut être déplacé axialement par rapport au réceptacle (26) le long d'un trajet de déplacement et possède un évidement intérieur (27) pourvu d'un taraudage (38) pouvant s'engrener de manière temporaire avec une vis de réglage (33), et ledit trajet de déplacement peut être modifié par modification du chevauchement entre ledit taraudage (38) et ladite vis de réglage (33).

15. Système (1) selon la revendication 14, **caractérisé en ce que** la vis de réglage (33) est prévue précontrainte axialement au moyen d'un dispositif à ressort (32) et la précontrainte axiale précontraint l'élément à complémentarité de forme (29) pour maintenir de manière temporaire l'engrènement de la denture.

16. Système (1) selon l'une des revendications 13 à 15, **caractérisé en ce que** le pas de la denture (30, 31) est conçu de façon qu'un réglage de l'orientation verticale de la surface de sortie de lumière (6) du projecteur de travail (5) est prévu selon un pas de 1 à 25 degrés, de préférence de 2 à 15 degrés, de préférence de 7 degrés.

17. Système (1) de commande d'un projecteur de travail (5) pour une machine de travail (2) et une machine fonctionnelle (3) à coupler fonctionnellement à la machine de travail, le système présentant au moins un projecteur de travail (5) prévu pour éclairer une zone de travail (16) à surveiller par un utilisateur du système, le système comprenant également des moyens de commande (11) permettant de commander le fonctionnement du projecteur de travail (5) et le système présentant un dispositif de stockage de données (9) conçu pour le stockage d'un profil d'éclairage, ledit profil d'éclairage comprenant des données et/ou des instructions qui sont prévues pour être transmises aux moyens de commande (11) et les moyens de commande (11) commandant l'au moins un projecteur de travail (5) pour éclairer la zone de travail (16) conformément au profil d'éclairage, **caractérisé en ce que** le dispositif de stockage de données (9) est conçu pour stocker différents profils d'éclairage associés à différents utilisateurs du système (1).

18. Système selon la revendication 17, **caractérisé en ce que** le projecteur de travail (5) comporte un dispositif de réglage de l'orientation verticale de la surface de sortie de lumière (6) du projecteur de travail (5), et le dispositif comporte un dispositif de maintien (25) permettant de fixer de manière temporaire le projecteur de travail (5) sur un support ainsi qu'un élément à complémentarité de forme (29) coopérant avec une portion du réceptacle (26) qui est prévue sur un boîtier (39) du projecteur de travail (5) et qui est complémentaire, en forme et en superficie, du premier élément à complémentarité de forme.

19. Système selon la revendication 18, **caractérisé en ce que** le dispositif de maintien (25) comprend une denture (30) prévue sur le réceptacle (26) et en engrènement temporaire avec une denture (31) prévue sur l'élément à complémentarité de forme (29) et l'engrènement de la denture peut être libéré au moyen d'un déplacement axial de l'élément à complémentarité de forme (29) par rapport au réceptacle (26).

20. Système selon la revendication 18 ou 19, **caractérisé en ce que** l'élément à complémentarité de forme (29) présente une configuration allongée et peut être déplacé axialement par rapport au réceptacle (26) le long d'un trajet de déplacement et possède un évidement intérieur (27) pourvu d'un taraudage (38) pouvant s'engrener de manière temporaire avec une vis de réglage (33), et ledit trajet de déplacement peut être modifié par modification du chevauchement entre ledit taraudage (38) et ladite vis de réglage (33).

21. Système selon la revendication 20, **caractérisé en ce que** la vis de réglage (33) est prévue précontrainte axialement au moyen d'un dispositif à ressort (32) et la précontrainte axiale précontraint l'élément à complémentarité de forme (29) pour maintenir de manière temporaire l'engrènement de la denture.

22. Système selon l'une des revendications 19 à 21, **caractérisé en ce que** le pas de la denture (30, 31) est conçu de façon qu'un réglage de l'orientation verticale de la surface de sortie de lumière (6) du projecteur de travail (5) est prévu selon un pas de 1 à 25 degrés, de préférence de 2 à 15 degrés, de préférence de 7 degrés.
